# EUROPEAN PATENT SPECIFICATION

(11) **EP 3 482 871 B1**
(45) Date of publication and mention of the grant of the patent: **15.12.2021**
(21) Application number: 17826983.3
(22) Date of filing: 11.07.2017
(51) Int. Cl.: B23P 21/00

(54) **ASSEMBLING MACHINE FOR ASSEMBLING A MEDICINE MIXER**
MONTAGEVORRICHTUNG ZUM ZUSAMMENSETZEN EINES MEDIKAMENTENMISCHERS
MACHINE D'ASSEMBLEGE POUR L'ASSEMBLAGE D'UN MÉLANGEUR DE MÉDICAMENTS

(30) Priority: 11.07.2016 CN 201610540967
(43) Date of publication of application: 15.05.2019
(73) Proprietor: Chongqing LUMMY Pharmaceutical Co., Ltd, Nanan District Chongqing (CN)
(72) Inventor: QIU, Yu, Chongqing Sichuan 401123 (CN); LI, Ke, Chongqing Sichuan 401123 (CN); ZHANG, Yun, Chongqing Sichuan 401123 (CN)
(74) Representative: Huang, Liwei
(86) International application number: PCT/CN2017/092531
(87) International publication number: WO 2018/010647

(56) References cited:
- CN-A- 102 554 612
- CN-A- 105 108 492
- CN-A- 105 232 331
- CN-A- 106 112 507
- CN-A- 106 181 356
- CN-A- 106 181 357
- CN-A- 106 181 358
- CN-A- 106 182 759
- CN-A- 106 185 251
- CN-A- 106 216 976
- KR-A- 20100 105 944

## Description

### FIELD OF THE INVENTION

The present invention relates to the field of medicine mixer assembly technologies, in particular to an assembly machine for a medicine mixer.

### BACKGROUND OF THE INVENTION

In order to completely solve the problem of infusion safety, the present inventor has designed a medicine mixer used with a soft infusion bag and a penicillin bottle in his previous patent. However, due to a complicated structure of the medicine mixer with many components, the assembly equipment in the prior art cannot automatically assemble the medicine mixer, which seriously limits industrialization, promotion and use of the medicine mixer.

In the prior art, various types of equipment cannot assemble a medicine mixer automatically, or a medicine mixer satisfying medical criteria.

CN 105 108 492 A discloses an assembly machine comprising:a rack, provided with a rotatable dividing table on which a plurality of clamps is arranged fixedly.

### SUMMARY OF THE INVENTION

The present invention provides an assembly machine for a medicine mixer which may improve working efficiency, save manpower resources and effectively ensure product qualities.

According to the present invention, there is provided an assembly machine for a medicine mixer, including: a rack, provided with a rotatable dividing table on which a plurality of clamps is arranged fixedly; a medicine mixing cup mounting device, arranged on the rack in butt-joint with the dividing table, for mounting the medicine mixing cup on the clamp of the dividing table; a rubber plug mounting device, arranged on the rack in butt-joint with the dividing table, for mounting the rubber plug in the medicine mixing cup; an elastic clip mounting device, arranged on the rack in butt-joint with the dividing table, for mounting an elastic clip in the medicine mixing cup; a puncture needle mounting device, arranged on the rack in butt-joint with the dividing table, for mounting a puncture needle in the medicine mixing cup; a coverplate mounting device, arranged on the rack in butt-joint with the dividing table, for mounting a coverplate on the medicine mixing cup; a soldering device, arranged on the rack in butt-joint with the dividing table, for covering a peeling tape on the coverplate and soldering the same on the medicine mixing cup; and an output device, arranged on the rack in butt-joint with the dividing table, for outputting the assembled medicine mixer.

Optionally, in the above-mentioned invention, the medicine mixing cup mounting device, the rubber plug mounting device, the elastic clip mounting device, the puncture needle mounting device, the coverplate mounting device, the soldering device and the output device are arranged annularly along an outer circumference of the dividing table successively.

Optionally, in the above-mentioned invention, the assembly machine further includes: a dripping device, for dripping quantitative liquid into the medicine mixing cup in the process of assembling the medicine mixer.

Optionally, in the above-mentioned invention, the dripping device includes: a cannula for dripping liquid into the medicine mixing cup, and a flow regulation device located on the cannula.

Optionally, in the above-mentioned invention, the medicine mixing cup mounting device includes: a medicine mixing cup conveying mechanism and a medicine mixing cup clamping mechanism; the medicine mixing cup conveying mechanism is used for conveying the medicine mixing cup, and the medicine mixing cup clamping mechanism is used for clamping the medicine mixing cup on the medicine mixing cup conveying mechanism, and placing this medicine mixing cup on the clamp of the dividing table.

Optionally, in the above-mentioned invention, the medicine mixing cup conveying mechanism includes: a medicine mixing cup oscillating disk and a medicine mixing cup conveying track; one end of the medicine mixing cup conveying track is in butt-joint with the medicine mixing cup oscillating disk, and its other end is in butt-joint with the dividing table.

Optionally, in the above-mentioned invention, the dual track for conveying medicine mixing cup is in individual butt-joint with the dual oscillating disk correspondingly.

Optionally, in the above-mentioned invention, the medicine mixing cup clamping mechanism includes: a medicine mixing cup horizontal driving component, a medicine mixing cup vertical driving component and a clamping shaft; the medicine mixing cup vertical driving component is arranged on the medicine mixing cup horizontal driving component and may be driven by the medicine mixing cup horizontal driving component to move horizontally; the clamping shaft is arranged on the medicine mixing cup vertical driving component and may be driven by the medicine mixing cup vertical driving component to move vertically.

Optionally, in the above-mentioned invention, the medicine mixing cup mounting device further includes: a front blocking component and a rear blocking component which are located at two sides of the clamping shaft respectively, wherein the front blocking component is close to the medicine mixing cup oscillating disk and the rear blocking component is close to the dividing table.

Optionally, in the above-mentioned invention, the medicine mixing cup mounting device further includes: a medicine mixing cup detector, for detecting whether there is a medicine mixing cup on the medicine mixing cup conveying track; when the medicine mixing cup detector does not detect a medicine mixing cup on the medicine mixing cup conveying track, the front blocking component and the medicine mixing cup vertical driving component are retracted, and the rear blocking component and the medicine mixing cup horizontal driving component are extended; when the medicine mixing cup detector detects a medicine mixing cup on the medicine mixing cup conveying track, the front blocking component is extended, the medicine mixing cup vertical driving component is extended to insert the clamping shaft in the medicine mixing cup, the rear blocking component is retracted, and then the medicine mixing cup horizontal driving component is retracted to place the medicine mixing cup on the clamp of the dividing table.

Optionally, in the above-mentioned invention, the rubber plug mounting device includes: a rubber plug conveying mechanism and a rubber plug clamping mechanism; the rubber plug conveying mechanism is used for conveying the rubber plug, and the rubber plug clamping mechanism is used for clamping the rubber plug on the rubber plug conveying mechanism, and placing this rubber plug in the medicine mixing cup.

Optionally, in the above-mentioned invention, the rubber plug conveying mechanism includes: a rubber plug oscillating disk and a rubber plug conveying track; one end of the rubber plug conveying track is in butt-joint with the rubber plug oscillating disk, and its other end is in butt-joint with the dividing table.

Optionally, in the above-mentioned invention, the rubber plug conveying tack is single, and the rubber plug oscillating disk is single.

Optionally, in the above-mentioned invention, the rubber plug clamping mechanism includes: a rubber plug horizontal driving component, a rubber plug vertical driving component and a rubber plug vacuum suction head; the rubber plug vertical driving component is arranged on the rubber plug horizontal driving component and may be driven by the rubber plug horizontal driving component to move horizontally; the rubber plug vacuum suction head is arranged on the rubber plug vertical driving component and may be driven by the rubber plug vertical driving component to move vertically.

Optionally, in the above-mentioned invention, the rubber plug mounting device further includes: a rubber plug detector, for detecting whether there is a rubber plug on the rubber plug conveying track; when the rubber plug detector does not detect a rubber plug on the rubber plug conveying track, the rubber plug vertical driving component is retracted, and the rubber plug horizontal driving component is extended; when the rubber plug detector detects a rubber plug on the rubber plug conveying track, the rubber plug vertical driving component is extended to suck the rubber plug through the rubber plug vacuum suction head, then the rubber plug vertical driving component and the rubber plug horizontal driving component are retracted successively, to bring the rubber plug to top of the medicine mixing cup, and then the rubber plug vertical driving component is extended again to mount the rubber plug in the medicine mixing cup.

Optionally, in the above-mentioned invention, one end of the rubber plug conveying track close to the dividing table is provided with a step for preventing the rubber plug from being off the track.

Optionally, in the above-mentioned invention, a protection plate for preventing the rubber plug from ejecting is arranged on the rubber plug conveying track.

Optionally, in the above-mentioned invention, the elastic clip mounting device includes: an elastic clip conveying mechanism and an elastic clip clamping mechanism; the elastic clip conveying mechanism is used for conveying the elastic clip, and the elastic clip clamping mechanism is used for clamping the elastic clip on the elastic clip conveying mechanism, and placing this elastic clip on the medicine mixing cup.

Optionally, in the above-mentioned invention, the elastic clip conveying mechanism includes: an elastic clip oscillating disk and an elastic clip conveying track; one end of the elastic clip conveying track is in butt-joint with the elastic clip oscillating disk, and its other end is in butt-joint with the dividing table.

Optionally, in the above-mentioned invention, the elastic clip conveying tack is single, and the elastic clip oscillating disk is single.

Optionally, in the above-mentioned invention, the elastic clip clamping mechanism includes: an elastic clip horizontal driving component, an elastic clip vertical driving component and an elastic clip vacuum suction head; the elastic clip vertical driving component is arranged on the elastic clip horizontal driving component and may be driven by the elastic clip horizontal driving component to move horizontally; the elastic clip vacuum suction head is arranged on the elastic clip vertical driving component and may be driven by the elastic clip vertical driving component to move vertically.

Optionally, in the above-mentioned invention, the elastic clip mounting device further includes: an elastic clip detector, for detecting whether there is an elastic clip on the elastic clip conveying track; when the elastic clip detector does not detect an elastic clip on the elastic clip conveying track, the elastic clip vertical driving component is retracted, and the elastic clip horizontal driving component is extended; when the elastic clip detector detects an elastic clip on the elastic clip conveying track, the elastic clip vertical driving component is extended to suck the elastic clip through the elastic clip vacuum suction head, then the elastic clip vertical driving component and the elastic clip horizontal driving component are retracted successively, to bring the elastic clip to top of the medicine mixing cup, and then the elastic clip vertical driving component is extended again to mount the elastic clip in the medicine mixing cup.

Optionally, in the above-mentioned invention, the puncture needle mounting device includes: a puncture needle conveying mechanism and a puncture needle clamping mechanism; the puncture needle conveying mechanism is used for conveying the puncture needle, and the puncture needle clamping mechanism is used for clamping the puncture needle on the puncture needle conveying mechanism, and placing this puncture needle on the medicine mixing cup.

Optionally, in the above-mentioned invention, the puncture needle conveying mechanism includes: a puncture needle oscillating disk and a puncture needle conveying track; one end of the puncture needle conveying track is in butt-joint with the puncture needle oscillating disk, and its other end is in butt-joint with the dividing table.

Optionally, in the above-mentioned invention, the puncture needle conveying tack is single, and the puncture needle oscillating disk is single.

Optionally, in the above-mentioned invention, the puncture needle clamping mechanism includes: a puncture needle horizontal driving component, a puncture needle vertical driving component and a puncture needle vacuum suction head; the puncture needle vertical driving component is arranged on the puncture needle horizontal driving component and may be driven by the puncture needle horizontal driving component to move horizontally; the puncture needle vacuum suction head is arranged on the puncture needle vertical driving component and may be driven by the puncture needle vertical driving component to move vertically.

Optionally, in the above-mentioned invention, the puncture needle mounting device further includes: a puncture needle detector, for detecting whether there is a puncture needle on the puncture needle conveying track; when the puncture needle detector does not detect a puncture needle on the puncture needle conveying track, the puncture needle vertical driving component is retracted, and the puncture needle horizontal driving component is extended; when the puncture needle detector detects a puncture needle on the puncture needle conveying track, the puncture needle vertical driving component is extended to suck the puncture needle through the puncture needle vacuum suction head, then the puncture needle vertical driving component and the puncture needle horizontal driving component are retracted successively, to bring the puncture needle to top of the medicine mixing cup, and then the puncture needle vertical driving component is extended again to mount the puncture needle in the medicine mixing cup.

Optionally, in the above-mentioned invention, the coverplate mounting device includes: a coverplate conveying mechanism and a coverplate clamping mechanism; the coverplate conveying mechanism is used for conveying the coverplate, and the coverplate clamping mechanism is used for clamping the coverplate on the coverplate conveying mechanism, and placing this coverplate on the medicine mixing cup.

Optionally, in the above-mentioned invention, the coverplate conveying mechanism includes: a coverplate oscillating disk and a coverplate conveying track; one end of the coverplate conveying track is in butt-joint with the coverplate oscillating disk, and its other end is in butt-joint with the dividing table.

Optionally, in the above-mentioned invention, the coverplate conveying track is single, and the coverplate oscillating disk is single.

Optionally, in the above-mentioned invention, the coverplate clamping mechanism includes: a coverplate horizontal driving component, a coverplate vertical driving component and a coverplate vacuum suction head; the coverplate vertical driving component is arranged on the coverplate horizontal driving component and may be driven by the coverplate horizontal driving component to move horizontally; the coverplate vacuum suction head is arranged on the coverplate vertical driving component and may be driven by the coverplate vertical driving component to move vertically.

Optionally, in the above-mentioned invention, the coverplate mounting device further includes: a coverplate blocking component, close to the coverplate oscillating disk, for preventing the coverplate oscillating disk from being conveyed to the coverplate of the coverplate conveying track.

Optionally, in the above-mentioned invention, the coverplate mounting device further includes: a coverplate detector, for detecting whether there is a coverplate on the coverplate conveying track; when the coverplate detector does not detect a coverplate on the coverplate conveying track, the coverplate vertical driving component and the coverplate blocking component are retracted, and the coverplate horizontal driving component is extended; when the coverplate detector detects a coverplate on the coverplate conveying track, the coverplate blocking component is extended, then the coverplate vertical driving component is extended to suck the coverplate through the coverplate vacuum suction head, the coverplate vertical driving component and the coverplate horizontal driving component are retracted successively, to bring the coverplate to top of the medicine mixing cup, and then the coverplate vertical driving component is extended again to mount the coverplate on the medicine mixing cup.

Optionally, in the above-mentioned invention, the soldering device includes: a tape conveying mechanism, a tape pulling mechanism, a soldering mechanism and a tape cutting mechanism; the tape conveying mechanism is used for conveying the peeling tape to the tape pulling mechanism, the tape pulling mechanism is used for conveying the peeling tape to top the medicine mixing cup, the soldering mechanism is used for soldering the peeling tape above the medicine mixing cup onto the medicine mixing cup, and the tape cutting mechanism is used for cutting the peeling tape.

Optionally, in the above-mentioned invention, the tape conveying mechanism includes: a tape rolling support, a tensioning cylinder, a fixing roller and a tape conveying roller; the tensioning cylinder drives the tape conveying roller to convey the peeling tape on the tape rolling support to the tape conveying mechanism through the fixing roller.

Optionally, in the above-mentioned invention, the tape pulling mechanism includes: a peeling tape horizontal driving component, a peeling tape vertical driving component and a peeling tape vacuum suction head; the peeling tape vertical driving component is arranged on the peeling tape horizontal driving component and may be driven by the peeling tape horizontal driving component to move horizontally; the peeling tape vacuum suction head is arranged on the peeling tape vertical driving component and may be driven by the peeling tape vertical driving component to move vertically.

Optionally, in the above-mentioned invention, the tape pulling mechanism further includes: a tape pressing component, for compressing the peeling tape through a tape pressing block before the peeling tape is sucked by the peeling tape vacuum suction head.

Optionally, in the above-mentioned invention, the surface of the tape pressing block towards the peeling tape is provided with a slide-proof pad.

Optionally, in the above-mentioned invention, the soldering mechanism includes: a tape soldering driving component and a tape soldering die which is connected with a driving end of the tape soldering driving component.

Optionally, in the above-mentioned invention, a heating rod and a temperature sensor are arranged in the tape soldering die.

Optionally, in the above-mentioned invention, the tape cutting mechanism includes: a tape cutting driving component and a tape cutter which is connected with a driving end of the tape cutting driving component.

Optionally, in the above-mentioned invention, the soldering device further includes: a tape trimming mechanism, for trimming a shape of the peeling tape soldered onto the medicine mixing cup, so that the peeling tape may easily be peeled in use.

Optionally, in the above-mentioned invention, the film trimming mechanism includes: a tape trimming driving component and a tape trimming knife which is connected with a driving end of the tape trimming driving component.

Optionally, in the above-mentioned invention, the tape trimming knife is serrated.

Optionally, in the above-mentioned invention, the driving end of the tape trimming driving component is provided with a knife holder on which the tape trimming knife is mounted.

Optionally, in the above-mentioned invention, a heating rod is arranged in the knife holder.

Optionally, in the above-mentioned invention, the output device includes: an output driving component and an output track, the output track is in butt-joint with the dividing table, and the driving shaft of the output driving component pushes the assembled medicine mixer on the clamp of the dividing table into the output track.

The assembly machine for a medicine mixer according to the present invention is controlled by PLC. A feeding system consisting of a plurality of groups of oscillating disks and tracks conveys each part at an interface of the medicine mixer to given positions of the equipment; each part is conveyed and assembled on the dividing table driven by a servo motor or a pneumatic dividing table or a cam indexing unit through a machine hand, a vacuum suction head or a fetching device, which effectively improves the working efficiency, saves manpower resources and ensures product assembling qualities.

### BRIEF DESCRIPTION OF THE DRAWINGS

Figure 1 shows a structural schematic diagram of a medicine mixer suitable for an assembly machine for a medicine mixer according to some embodiments of the present invention;
Figure 1a is a structural schematic diagram of a medicine mixing cup and a rubber plug in the medicine mixer;
Figure 1b is a structural schematic diagram of an elastic clip in the medicine mixer;
Figure 1c is a structural schematic diagram of a puncture needle in the medicine mixer;
Figure 1d is a structural schematic diagram of a coverplate in the medicine mixer;
Figure 1e is a structural schematic diagram after parts in the medicine mixer are assembled;
Figure 2 shows a structural schematic diagram of a assembly machine for a medicine mixer according to some embodiments of the present invention;
Figure 3 shows a structural schematic diagram of a medicine mixing cup mounting device in Figure 2;
Figure 4 shows a structural schematic diagram of a rubber plug mounting device in Figure 2;
Figure 5 shows a structural schematic diagram of an elastic clip mounting device in Figure 2;
Figure 6 shows a structural schematic diagram of a puncture needle mounting device in Figure 2;
Figure 7 shows a structural schematic diagram of a dripping device of the assembly machine for a medicine mixer according to some embodiments of the present invention;
Figure 8 shows a structural schematic diagram of a coverplate mounting device in Figure 2;
Figure 9 shows a structural schematic diagram of a tape conveying mechanism of a soldering device in Figure 2;

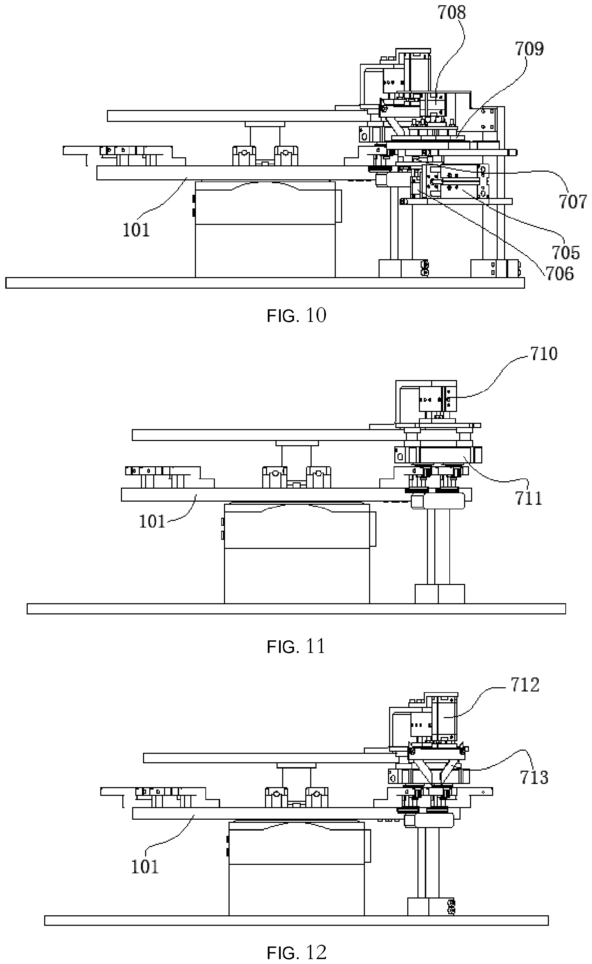

Figure 10 shows a structural schematic diagram of a tape pulling mechanism of the soldering device in Figure 2;
Figure 11 shows a structural schematic diagram of a soldering mechanism of the soldering device in Figure 2;
Figure 12 shows a structural schematic diagram of a tape cutting mechanism of the soldering device in Figure 2;

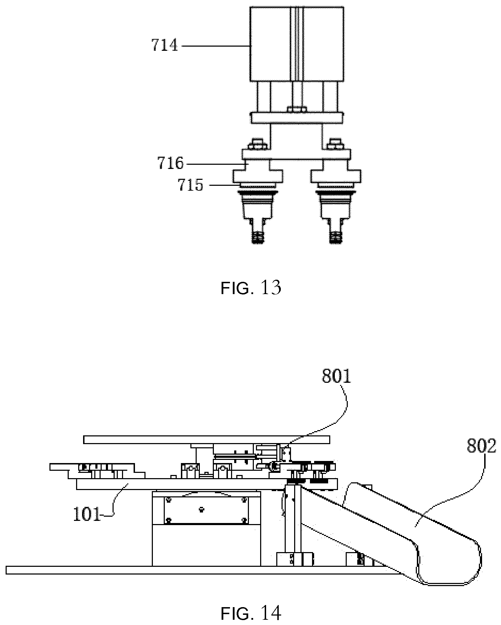

Figure 13 shows a structural schematic diagram of a tape trimming mechanism of the soldering device in Figure 2;
Figure 14 shows a structural schematic diagram of an output device in Figure 2; and
Figure 15 shows a workflow chart of an assembly machine for a medicine mixer according to some embodiments of the present invention.

In the drawings:
1 medicine mixing cup; 2 rubber plug; 3 elastic clip; 4 puncture needle; 5 coverplate; 6 peeling tape; 100 rack; 101 dividing table; 102 clamp;
200 medicine mixing cup mounting device; 201 medicine mixing cup oscillating disk; 202 medicine mixing cup conveying track; 203 medicine mixing cup horizontal driving component; 204 medicine mixing cup vertical driving component; 205 clamping shaft; 206 front blocking component; 207 rear blocking component;
300 rubber plug mounting device; 301 rubber plug oscillating disk; 302 rubber plug conveying track; 303 rubber plug horizontal driving component; 304 rubber plug vertical driving component; 305 rubber plug vacuum suction head;
400 elastic clip mounting device; 401 elastic clip oscillating disk, 402 elastic clip conveying track, 403 elastic clip horizontal driving component, 404 elastic clip vertical driving component, 405 elastic clip vacuum suction head;
500 puncture needle mounting device, 501 puncture needle oscillating disk, 502 puncture needle conveying track, 503 puncture needle horizontal driving component, 504 puncture needle vertical driving component, 505 puncture needle vacuum suction head, 506 cannula, 507 peristaltic pump, 508 liquid container;
600 coverplate mounting device; 601 coverplate oscillating disk; 602 coverplate conveying track; 603 coverplate horizontal driving component; 604 coverplate vertical driving component; 605 coverplate vacuum suction head; 606 coverplate blocking component;
700 soldering device, 701 tape rolling support, 702 tensioning cylinder, 703 fixing roller, 704 tape conveying roller, 705 peeling tape horizontal driving component, 706 peeling tape vertical driving component, 707 peeling tape vacuum suction head, 708 tape pressing component, 709 tape pressing block, 710 tape soldering driving component, 711 tape soldering die, 712 tape cutting driving component, 713 tape cutter, 714 tape trimming driving component, 715 tape trimming knife, 716 knife holder;
800 output device, 801 output driving component, 802 output track.

### DETAILED DESCRIPTION OF THE EMBODIMENTS

In order to make the objectives, technical solution and advantages of the present invention clearer, the present invention is further explained in detail with combination of the embodiments and with reference to the drawings. It shall be understood that the descriptions are only illustrative, but not to limit the scope of the present invention. In addition, in the following explanation, the description of the well-known structure and technology is omitted to avoid unnecessarily confusing the concepts of the present invention.

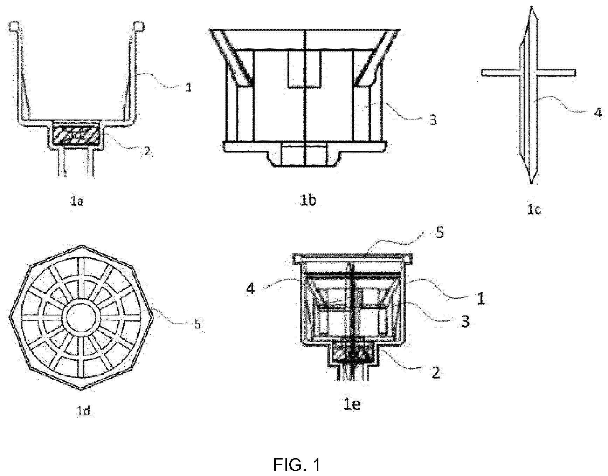

Figure 1 shows a structural schematic diagram of a medicine mixer suitable for an assembly machine for a medicine mixer according to some embodiments of the present invention; Figure 1a is a structural schematic diagram of a medicine mixing cup and a rubber plug in the medicine mixer; Figure 1b is a structural schematic diagram of an elastic clip in the medicine mixer; Figure 1c is a structural schematic diagram of a puncture needle in the medicine mixer; Figure Id is a structural schematic diagram of a coverplate in the medicine mixer; Figure 1e is a structural schematic diagram after parts in the medicine mixer are assembled.

In order to make the public better understand the assembly machine for a medicine mixer according to the present invention, before explanation on the assembly machine, the medicine mixer proposed in the prior patent by the present inventor mentioned in the background art is firstly introduced. Referring to Figures 1a to 1e, the medicine mixer assembled by the assembly machine for a medicine mixer according to the present invention includes a medicine mixing cup 1, a rubber plug 2, an elastic clip 3, a puncture needle 4, a coverplate 5 and a peeling tape 6. The rubber plug 2, the elastic clip 3 and the puncture needle 4 are arranged in the medicine mixing cup 1, the coverplate 5 is covered at rim of the medicine mixing cup 1, and the peeling tape 6 is covered on the coverplate 5. It should be noted that the shape of each part of the medicine mixer shown in Figure 1 is only used for better understanding the medicine mixer assembled by the assembly machine for a medicine mixer according to the present invention, instead of limiting the protection range of the present invention.

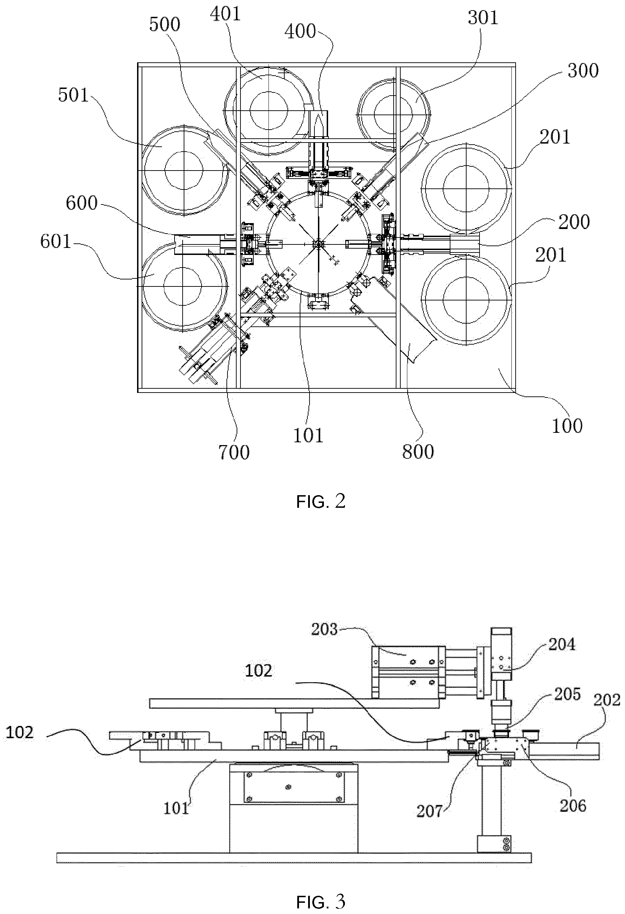

Figure 2 shows a structural schematic diagram of an assembly machine for a medicine mixer according to some embodiments of the present invention.

The assembly machine for a medicine mixer according to the present embodiment will be explained below in combination with Figure 2.

The assembly machine for a medicine mixer according to the present embodiment at least includes: a rack 100, a medicine mixing cup mounting device 200, a rubber plug mounting device 300, an elastic clip mounting device 400, a puncture needle mounting device 500, a dripping device, a coverplate mounting device 600, a soldering device 700 and an output device 800.

The medicine mixing cup mounting device 200, the rubber plug mounting device 300, the elastic clip mounting device 400, the puncture needle mounting device 500, the coverplate mounting device 600, the soldering device 700 and the output device 800 are arranged annularly along the outer circumference of the dividing table 101 successively, and are in butt-joint with the dividing table 101 on the rack 100 respectively, such that each part of the medicine mixer is assembled on the dividing table 101 effectively and orderly. Specifically, the medicine mixing cup mounting device 200 is firstly in butt-joint with the dividing table 101, and the medicine mixing cup 1 is mounted on the clamp 102 of the dividing table 101. After the medicine mixing cup 1 is mounted, the dividing table 101 keeps rotating by a predetermined angle, such that this clamp 102 rotates to the position in butt-joint with the rubber plug mounting device 300 which mounts the rubber plug 2 in the medicine mixing cup 1. After the rubber plug 2 is mounted, the dividing table 101 keeps rotating by a predetermined angle, such that this clamp 102 rotates to the position in butt-joint with the elastic clip mounting device 400 which mounts the elastic clip 3 in the medicine mixing cup 2. After the elastic clip 3 is mounted, the dividing table 101 keeps rotating by a predetermined angle, such that this clamp 102 rotates to the position in butt-joint with the puncture needle mounting device 500 which mounts the puncture needle 4 in the medicine mixing cup 1. After the puncture needle 4 is mounted, the dividing table 101 keeps rotating by a predetermined angle, such that this clamp 102 rotates to the position in butt-joint with the coverplate mounting device 600 which mounts the coverplate 5 on the rim of the medicine mixing cup 1. After the coverplate 5 is mounted, the dividing table 101 keeps rotating by a predetermined angle, such that this clamp 102 rotates to the position in butt-joint with the soldering device 700 which covers the peeling tape 6 on the coverplate 5, and solders the same on the medicine mixing cup 1, thus far finishing the assembly of the medicine mixer. After the medicine mixer is assembled, the dividing table 101 keeps rotating by a predetermined angle, such that this clamp 102 rotates to the position in butt-joint with the output device 800 which takes out and outputs the assembled medicine mixer from the clamp 102.

The rack 100 is provided with the dividing table 101 which rotates with respect to this rack 100. This dividing table 1 is driven by a driving device such as the servo motor or the pneumatic dividing table or the cam indexing unit to rotate around its own center. The dividing table 101 has a platform shape of circle, regular polygon or other central symmetric figures. The platform of the dividing table 101 shown in Figure 1 is circular. On the circumference of the platform of the dividing table 101, a plurality of clamps 102 is fixed annularly, for chucking and fixing the medicine mixing cup in the clamp 102, such that this medicine mixing cup rotates with the dividing table 101.

Figure 3 shows a structural schematic diagram of a medicine mixing cup mounting device.

The medicine mixing cup mounting device 200 has a structure as shown in Figure 3, including: a medicine mixing cup conveying mechanism and a medicine mixing cup clamping mechanism; the medicine mixing cup conveying mechanism is used for conveying the medicine mixing cup within a clamping range of the medicine mixing cup clamping mechanism, and the medicine mixing cup clamping mechanism is used for clamping the medicine mixing cup on the medicine mixing cup conveying mechanism, and placing this medicine mixing cup on the clamp 102 of the dividing table 101.

Specifically, the medicine mixing cup conveying mechanism includes a medicine mixing cup oscillating disk 201 and a medicine mixing cup conveying track 202; one end of the medicine mixing cup conveying track 202 is in butt-joint with a discharge hole of the medicine mixing cup oscillating disk 201, its other end is in butt-joint with the dividing table 101, and the medicine mixing cup oscillating disk 201 conveys the medicine mixing cup to the dividing table 101 through the medicine mixing cup conveying track 202.

In the embodiment of the present invention, the number of medicine mixing cup conveying tracks 202 may be one or more, and the number of medicine mixing cup oscillating disks 201 may be one or more. It should be noted that the number of medicine mixing cup conveying tracks 202 corresponds to the number of medicine mixing cup oscillating disks 201, such that each oscillating disk is in butt-joint with one conveying track correspondingly, that is to convey one medicine mixing cup. In the embodiment in Figure 2, the dual track 202 for conveying medicine mixing cup and the dual oscillating disk 201 for the medicine mixing cup are shown, not to limit the protection range of the present invention.

Specifically, the medicine mixing cup clamping mechanism includes a medicine mixing cup horizontal driving component 203, a medicine mixing cup vertical driving component 204 and a clamping shaft 205. The medicine mixing cup vertical driving component 204 is arranged on the medicine mixing cup horizontal driving component 203 and may be driven by the medicine mixing cup horizontal driving component 203 to move horizontally; the clamping shaft 205 is arranged on the medicine mixing cup vertical driving component 204 and may be driven by the medicine mixing cup vertical driving component 204 to move vertically. In this way, the clamping shaft may be driven by the medicine mixing cup vertical driving component 204 and the medicine mixing cup horizontal driving component 203 to be inserted into the medicine mixing cup, so as to place the medicine mixing cup on the clamp 102 of the dividing table 101.

Optionally, the medicine mixing cup horizontal driving component 203 and the medicine mixing cup vertical driving component 204 are driving cylinders. The medicine mixing cup vertical driving component 204 is connected with a cylinder rod of the medicine mixing cup horizontal driving component 203, and the clamping shaft 205 is connected with a cylinder rod of the medicine mixing cup vertical driving component 204.

The medicine mixing cup mounting device 200 further includes: a medicine mixing cup detector and a front blocking component 206 and a rear blocking component 207 located at two sides of the clamping shaft 205 respectively. The front blocking component 206 and the rear blocking component 207 are both cylinders with block pieces, the front blocking component 206 is close to the medicine mixing cup oscillating disk 201, and the rear blocking component 207 is close to the dividing table 101. The medicine mixing cup detector is used for detecting whether there is a medicine mixing cup on the medicine mixing cup conveying track 202. When the medicine mixing cup detector does not detect a medicine mixing cup on the medicine mixing cup conveying track 202, the front blocking component 206 is retracted, i.e., the block piece of the front blocking component 206 is retracted; the medicine mixing cup vertical driving component 204 is also retracted, i.e., the cylinder rod of the medicine mixing cup vertical driving component 204 is retracted; the rear blocking component 207 and the medicine mixing cup horizontal driving component 203 are both extended, i.e., the block piece of the rear blocking component 207 and the cylinder rod of the medicine mixing cup horizontal driving component 203 are both extended; when the medicine mixing cup detector detects a medicine mixing cup on the medicine mixing cup conveying track 202, the front blocking component 206 drives its block piece to extend, such that the medicine mixing cup conveying track 202 is blocked by the block piece, so as to prevent the later medicine mixing cup pushes forwards and is stuck in the medicine mixing cup conveying track 202, and then the medicine mixing cup vertical driving component 204 drives its cylinder rod to extend, so as to insert the clamping shaft 205 in the medicine mixing cup. The rear blocking component 207 drives its block piece to retract, then the medicine mixing cup horizontal driving component 203 drives its cylinder rod to retract, so as to place the medicine mixing cup on the clamp 102 of the dividing table 101. Afterwards, the clamping shaft 205 of the medicine mixing cup is taken out from the cup, the rear blocking component 207 drives its block piece to extend, and the front blocking component 206 drives its block piece to retract, so as to be in the initial state. The dividing table 101 rotates, the empty clamp 102 enters this medicine mixing cup mounting working station to wait for the next cycle, and the medicine mixing cup is brought to the next working station, i.e., the rubber plug mounting working position.

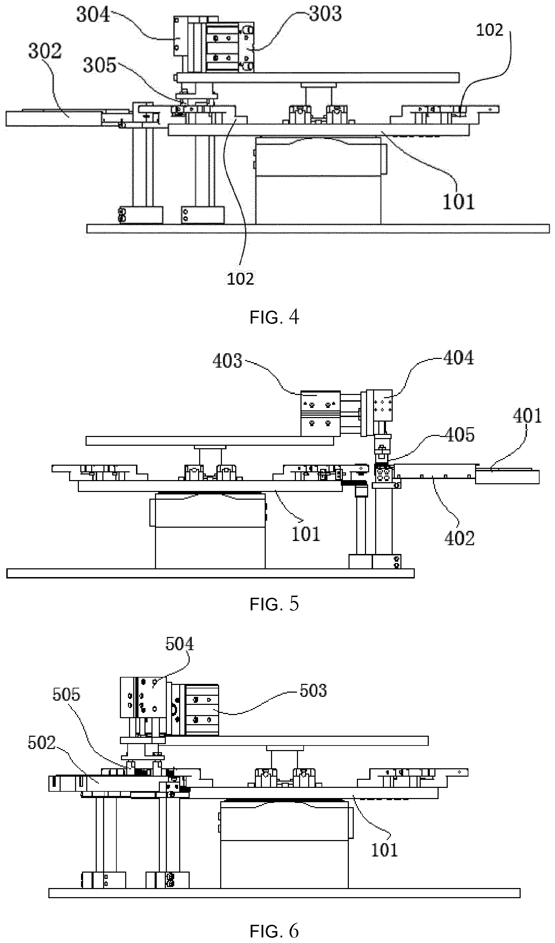

Figure 4 shows a structural schematic diagram of a rubber plug mounting device in Figure 2.

As shown in Figure 4, the rubber plug mounting device 300 includes: a rubber plug conveying mechanism and a rubber plug clamping mechanism; the rubber plug conveying mechanism is used for conveying the rubber plug, and the rubber plug clamping mechanism is used for clamping the rubber plug on the rubber plug conveying mechanism, and placing this rubber plug in the medicine mixing cup.

Specifically, the rubber plug conveying mechanism includes a rubber plug oscillating disk 301 and a rubber plug conveying track 302; one end of the rubber plug conveying track 302 is in butt-joint with the rubber plug oscillating disk 301, and its other end is in butt-joint with the dividing table 101. The rubber plug oscillating disk 301 conveys the rubber plug to the dividing table 101 through the rubber plug conveying track 302.

In the present embodiment, the rubber plug conveying track 302 is single, and the rubber plug oscillating disk 301 is single, for conveying two rubber plugs.

Specifically, the rubber plug clamping mechanism includes a rubber plug horizontal driving component 303, a rubber plug vertical driving component 304 and a rubber plug vacuum suction head 305. The rubber plug vertical driving component 304 is arranged on the rubber plug horizontal driving component 303 and may be driven by the rubber plug horizontal driving component 303 to move horizontally. The rubber plug vacuum suction head 305 is arranged on the rubber plug vertical driving component 304 and may be driven by the rubber plug vertical driving component 304 to move vertically. In this way, the rubber plug vacuum suction head 305 is driven by the rubber plug vertical driving component 304 and the rubber plug horizontal driving component 303 to suck the rubber plug, such that the rubber plug is mounted in the medicine mixing cup.

Optionally, the rubber plug horizontal driving component 303 and the rubber plug vertical driving component 304 are driving cylinders. The rubber plug vertical driving component 304 is connected with a cylinder rod of the rubber plug horizontal driving component 303, and the clamping shaft 305 is connected with a cylinder rod of the rubber plug vertical driving component 304.

The rubber plug mounting device 300 further includes a rubber plug detector for detecting whether there is a rubber plug on the rubber plug conveying track 302. When the rubber plug detector does not detect a rubber plug on the rubber plug conveying track 302, the PLC controller controls the cylinder rod of the rubber plug vertical driving component 304 to retract, and the cylinder rod of the rubber plug horizontal driving component 303 to extend. When the rubber plug detector detects a rubber plug on the rubber plug conveying track 302, the PLC controller controls the cylinder rod of the rubber plug vertical driving component 304 to extend, so as to suck the rubber plug through the rubber plug vacuum suction head 305. Then, the PLC controller controls the cylinder rod of the rubber plug vertical driving component 304 and the cylinder rod of the rubber plug horizontal driving component 303 to retract successively, so as to bring the rubber plug to top of the medicine mixing cup, and controls the cylinder rod of the rubber plug vertical driving component 304 to extend again, so as to mount the rubber plug in the medicine mixing cup, and afterwards go back to the initial state. The dividing table 101 rotates to make the empty clamp 102 enter the rubber plug mounting working station, waiting for the next cycle. The medicine mixing cup is brought to the next working station, i.e., the elastic clip mounting working station.

In the present embodiment, preferably, one end of the rubber plug conveying track 302 close to the dividing table 101 is provided with a step for preventing the rubber plug from being off the rubber plug conveying track 302, and a protection plate for preventing the rubber plug from ejecting is arranged on the rubber plug conveying track 302.

Figure 5 shows a structural schematic diagram of an elastic clip mounting device in Figure 2.

As shown in Figure 5, the elastic clip mounting device 400 includes: an elastic clip conveying mechanism and an elastic clip clamping mechanism; the elastic clip conveying mechanism is used for conveying the elastic clip, and the elastic clip clamping mechanism is used for clamping the elastic clip on the elastic clip conveying mechanism, and placing this elastic clip in the medicine mixing cup.

Specifically, the elastic clip conveying mechanism includes: an elastic clip oscillating disk 401 and an elastic clip conveying track 402; one end of the elastic clip conveying track 402 is in butt-joint with the elastic clip oscillating disk 401, and its other end is in butt-joint with the dividing table 101. The elastic clip oscillating disk 401 conveys the elastic clip to the dividing table 101 through the elastic clip conveying track 402.

In the present embodiment, the elastic clip conveying track 402 is single, and the elastic clip oscillating disk 401 is single, for conveying two elastic clips.

Specifically, the elastic clip clamping mechanism includes an elastic clip horizontal driving component 403, an elastic clip vertical driving component 404 and an elastic clip vacuum suction head 405. The elastic clip vertical driving component 404 is arranged on the elastic clip horizontal driving component 403, and may be driven by the elastic clip horizontal driving component 403 to move horizontally. The elastic clip vacuum suction head 405 is arranged on the elastic clip vertical driving component 404 and may be driven by the elastic clip vertical driving component 404 to move vertically. In this way, the elastic clip vacuum suction head 405 is driven by the elastic clip vertical driving component 404 and the elastic clip horizontal driving component 403 to suck the elastic clip, such that the elastic clip is mounted in the medicine mixing cup.

Optionally, the elastic clip horizontal driving component 403 and the elastic clip vertical driving component 404 are driving cylinders. The elastic clip vertical driving component 404 is connected with a cylinder rod of the elastic clip horizontal driving component 403, and the elastic clip vacuum suction head 405 is connected with a cylinder rod of the elastic clip vertical driving component 404.

The elastic clip mounting device 400 further includes an elastic clip detector for detecting whether there is an elastic clip on the elastic clip conveying track 402. When the elastic clip detector does not detect an elastic clip on the elastic clip conveying track 402, the elastic clip vertical driving component 404 is retracted, i.e., the cylinder rod of the elastic clip vertical driving component 404 is retracted; the elastic clip horizontal driving component 403 is extended, i.e., the cylinder rod of the elastic clip horizontal driving component 403 is extended; when the elastic clip detector detects an elastic clip on the elastic clip conveying track 402, the elastic clip vertical driving component 404 drives its cylinder rod to extend, and sucks the elastic clip through the elastic clip vacuum suction head 405. Then, the cylinder rod of the elastic clip vertical driving component 404 and the cylinder rod of the elastic clip horizontal driving component 403 are retracted successively to bring the elastic clip to top of the medicine mixing cup. Next, the elastic clip vertical driving component 404 drives its cylinder rod to extend again, so as to mount the elastic clip in the medicine mixing cup, so as to be in the initial state afterwards. The dividing table 101 rotates, the empty clamp 102 enters this elastic clip mounting working station to wait for the next cycle, and the medicine mixing cup is brought to the next working station, i.e., the puncture needle mounting working position.

Since the elastic clip needs to be clipped in the medicine mixing cup, a down force is relatively large. In order to prevent the medicine mixing cup from being deformed or damaged, the elastic clip mounting working station is supported by metal.

Figure 6 shows a structural schematic diagram of a puncture needle mounting device in Figure 2.

As shown in Figure 6, the puncture needle mounting device 500 includes: a puncture needle conveying mechanism and a puncture needle clamping mechanism; the puncture needle conveying mechanism is used for conveying the puncture needle, and the puncture needle clamping mechanism is used for clamping the puncture needle on the puncture needle conveying mechanism, and placing this puncture needle on the medicine mixing cup.

Specifically, the puncture needle conveying mechanism includes a puncture needle oscillating disk 501 and a puncture needle conveying track 502; one end of the puncture needle conveying track 502 is in butt-joint with the puncture needle oscillating disk 501, and its other end is in butt-joint with the dividing table 101. The puncture needle oscillating disk 501 conveys the puncture needle to the dividing table 101 through the puncture needle conveying track 502.

In the present embodiment, the puncture needle conveying track 502 is single, and the puncture needle oscillating disk 501 is single, for conveying two puncture needles.

Specifically, the puncture needle clamping mechanism includes: a puncture needle horizontal driving component 503, a puncture needle vertical driving component 504 and a puncture needle vacuum suction head 505. The puncture needle vertical driving component 504 is arranged on the puncture needle horizontal driving component 503 and may be driven by the puncture needle horizontal driving component 503 to move horizontally; the puncture needle vacuum suction head 505 is arranged on the puncture needle vertical driving component 504 and may be driven by the puncture needle vertical driving component 504 to move vertically. In this way, the puncture needle vacuum suction head 505 is driven by the puncture needle vertical driving component 504 and the puncture needle horizontal driving component 503 to suck the puncture needle, such that the puncture needle is mounted in the medicine mixing cup.

Optionally, the puncture needle horizontal driving component 503 and the puncture needle vertical driving component 504 are driving cylinders. The puncture needle vertical driving component 504 is connected with a cylinder rod of the puncture needle horizontal driving component 503, and the puncture needle vacuum suction head 505 is connected with a cylinder rod of the puncture needle vertical driving component 504.

The puncture needle mounting device 500 further includes a puncture needle detector, for detecting whether there is a puncture needle on the puncture needle conveying track 502. When the puncture needle detector does not detect a puncture needle on the puncture needle conveying track 502, the puncture needle vertical driving component 504 is retracted, i.e., the cylinder rod of the puncture needle vertical driving component 504 is retracted; the puncture needle horizontal driving component 503 is extended. When the puncture needle detector detects a puncture needle on the puncture needle conveying track 502, the puncture needle vertical driving component 504 drives its cylinder rod to extend, so as to suck the puncture needle through the puncture needle vacuum suction head 505, then the cylinder rod of the puncture needle vertical driving component 504 and the cylinder rod of the puncture needle horizontal driving component 503 are retracted successively, to bring the puncture needle to top of the medicine mixing cup, and then the puncture needle vertical driving component 504 drives its cylinder rod to extend again to mount the puncture needle in the medicine mixing cup, and to go back to the initial state afterwards. The dividing table 101 rotates to make the empty clamp 102 enter the puncture needle mounting working station, waiting for the next cycle. The medicine mixing cup is brought to the next working station, i.e., the coverplate mounting working station.

In another embodiment of the present invention, the assembly machine for a medicine mixer further includes a dripping device for dripping quantitative liquid in the medicine mixing cup during assembly of the medicine mixer. It should be noted that the dripping device may be mounted between the medicine mixing cup mounting device 200 and the rubber plug mounting device 300, or between the rubber plug mounting device 300 and the elastic clip mounting device 400, or between the elastic clip mounting device 400 and the puncture needle mounting device 500, even between the puncture needle mounting device 500 and the coverplate mounting device 600. However, it should be noted that dripping is finished before the coverplate is mounted.

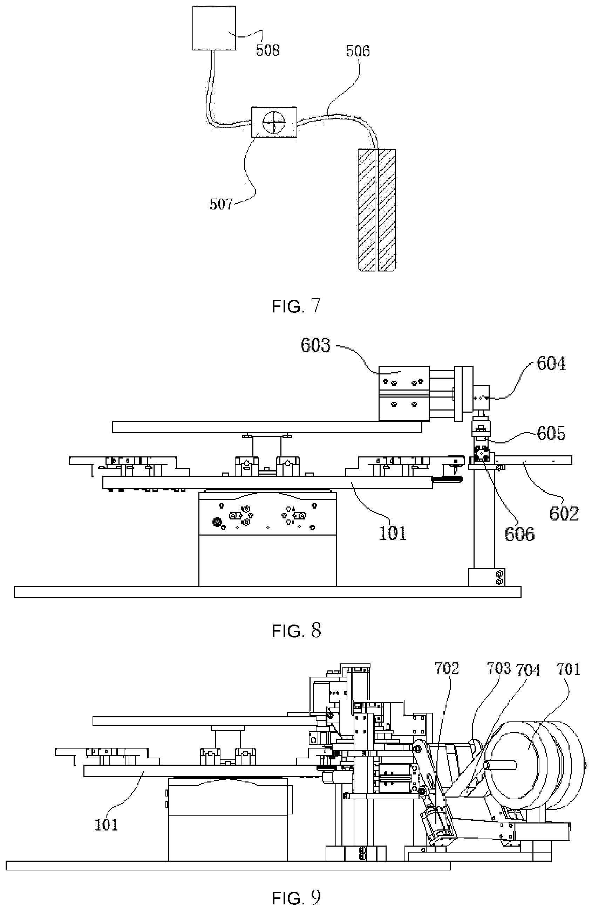

Figure 7 shows a structural schematic diagram of a dripping device of the assembly machine for a medicine mixer according to some embodiments of the present invention.

As shown in Figure 7, the dripping device includes: a cannula 506 for dripping liquid into the medicine mixing cup and a flow regulation device 507 located on the cannula 506. The cannula 506 and the flow regulation device 507 are used for dripping quantitative liquid into the medicine mixing cup. That is, a peristaltic pump 507 injects liquid in a liquid container into the medicine mixing cup through the cannula 506.

Optionally, the dripped liquid may be water for injection.

Optionally, the flow regulation device 507 may be the peristaltic pump.

Figure 8 shows a structural schematic diagram of a coverplate mounting device in Figure 2.

As shown in Figure 8, the coverplate mounting device 600 includes: a coverplate conveying mechanism and a coverplate clamping mechanism; the coverplate conveying mechanism is used for conveying the coverplate, and the coverplate clamping mechanism is used for clamping the coverplate on the coverplate conveying mechanism, and placing this coverplate on the medicine mixing cup.

Specifically, the coverplate conveying mechanism includes: a coverplate oscillating disk 601 and a coverplate conveying track 602; one end of the coverplate conveying track 602 is in butt-joint with the coverplate oscillating disk 601, and its other end is in butt-joint with the dividing table 101. The coverplate oscillating disk 601 conveys the coverplate to the dividing table 101 through the coverplate conveying track 602.

In the present embodiment, the coverplate conveying track 602 is single, and the coverplate oscillating disk 601 is single, for conveying two coverplates.

Specifically, the coverplate clamping mechanism includes a coverplate horizontal driving component 603, a coverplate vertical driving component 604 and a coverplate vacuum suction head 605. The coverplate vertical driving component 604 is arranged on the coverplate horizontal driving component 603, and is driven by the coverplate horizontal driving component 603 to move horizontally. The coverplate vacuum suction head 605 is arranged on the coverplate vertical driving component 604 and is driven by the coverplate vertical driving component 604 to move vertically. In this way, the coverplate vacuum suction head 605 is driven by the coverplate vertical driving component 604 and the coverplate horizontal driving component 603 to suck the coverplate, such that the coverplate is mounted on the medicine mixing cup.

Optionally, the coverplate horizontal driving component 603 and the coverplate vertical driving component 604 are driving cylinders. The coverplate vertical driving component 604 is connected with a cylinder rod of the coverplate horizontal driving component 603, and the coverplate vacuum suction head 605 is connected with a cylinder rod of the coverplate vertical driving component 604.

The coverplate mounting device 600 further includes a coverplate blocking component 606 and a puncture needle detector. The coverplate blocking component 606 is close to the coverplate oscillating disk 601. Due to the thin coverplate, the coverplate blocking component 606 is extended when the coverplate vacuum suction head 605 is pressed down to take out the coverplate, for blocking the next group of coverplates, and preventing mutual extrusion. This coverplate blocking component 606 is a cylinder with a block piece. The coverplate detector is used for detecting whether there is a coverplate on the coverplate conveying track 602. When the coverplate detector does not detect the coverplate on the coverplate conveying track 602, the PLC controller controls the cylinder rod of the coverplate vertical driving component 604 and the block piece of the coverplate blocking component 606 to retract, and controls the coverplate horizontal driving component 603 to extend, i.e., the coverplate horizontal driving component 603 drives its cylinder rod to extend. When the coverplate detector detects a coverplate on the coverplate conveying track 602, the PLC controller controls the block piece of the coverplate blocking component 606 to extend, and controls the cylinder rod of the coverplate vertical driving component 604 to extend, so as to suck the coverplate through the coverplate vacuum suction head 605. Then, the PLC controller controls the cylinder rod of the coverplate vertical driving component 604 and the coverplate horizontal driving component 603 to retract successively, for bringing the coverplate to top of the medicine mixing cup. Next, the PLC controller controls the cylinder rod of the coverplate vertical driving component 604 to extend again, for mounting the coverplate onto the medicine mixing cup, and going back to the initial state afterwards. The dividing table 101 rotates to make the empty clamp 102 enter the coverplate mounting working station, waiting for the next cycle. The medicine mixing cup is brought to the next working station, i.e., the soldering mounting working station.

The soldering device 700 is arranged on the rack 100 in butt-joint with the dividing table 101, for soldering the peeling tape on the medicine mixing cup to assemble the medicine mixer.

The soldering device 700 includes: a tape conveying mechanism, a tape pulling mechanism, a soldering mechanism and a tape cutting mechanism. The tape conveying mechanism is used for conveying the peeling tape to the tape pulling mechanism, the tape pulling mechanism is used for conveying the peeling tape to top the medicine mixing cup, the soldering mechanism is used for soldering the peeling tape above the medicine mixing cup onto the medicine mixing cup, and the tape cutting mechanism is used for cutting the peeling tape.

Figure 9 shows a structural schematic diagram of a tape conveying mechanism of the soldering device in Figure 2.

As shown in Figure 9, the tape conveying mechanism includes: a tape rolling support 701, a tensioning cylinder 702, a fixing roller 703 and a tape conveying roller 704. The tape conveying roller 704 is connected with a driving end of the tensioning cylinder 702, and the tape rolling support 701 and the fixing roller 703 are both arranged on the soldering device. When the tape is conveyed, the tensioning cylinder 702 drives the tape conveying roller 704 to convey the peeling tape on the tape rolling support 701 to the tape pulling mechanism through the fixing roller 703. That is, each time the tensioning cylinder 702 releases a fixed length of peeling tape, the peeling tape enters the tape pulling mechanism through the fixing roller 703.

Figure 20 shows a structural schematic diagram of a tape pulling mechanism of the soldering device in Figure 2.

The tape pulling mechanism includes: a peeling tape horizontal driving component 705, a peeling tape vertical driving component 706 and a peeling tape vacuum suction head 707. The peeling tape vertical driving component 706 is arranged on the peeling tape horizontal driving component 705, and may be driven by the peeling tape horizontal driving component 705 to move horizontally. The peeling tape vacuum suction head 707 is arranged on the peeling tape vertical driving component 706 and may be driven by the peeling tape vertical driving component 706 to move vertically. In this way, the peeling tape vacuum suction head 707 is driven by the peeling tape vertical driving component 706 and the peeling tape horizontal driving component 705 to suck the peeling tape, for conveying the peeling tape to top of the medicine mixing cup.

Optionally, the peeling tape horizontal driving component 705 and the peeling tape vertical driving component 706 are both driving cylinders. The peeling tape vertical driving component 706 is connected with a cylinder rod of the peeling tape horizontal driving component 705, and the peeling tape vacuum suction head 707 is connected with a cylinder rod of the peeling tape vertical driving component 706.

In the present embodiment, the tape pulling mechanism further includes a tape pressing component 708, for compressing the peeling tape through a tape pressing block 709 before the peeling tape is sucked by the peeling tape vacuum suction head 707. The tape pressing block 709 is connected with the driving end of the tape pressing cylinder of the tape pressing component 708. When the tape pressing block 709 is extended, the peeling tape is compressed. Preferably, the surface of the tape pressing block 709 toward the peeling tape is provided with a slide-proof pad.

Figure 21 shows a structural schematic diagram of a soldering mechanism of the soldering device in Figure 2.

The soldering mechanism includes: a tape soldering driving component 710 and a tape soldering die 711 which is connected with a driving end of the tape soldering driving component 710. The tape soldering die 711 is driven by the tape soldering driving component 710 to move, for soldering the peeling tape onto the medicine mixing cup. The tape soldering die 711 is made of special die steel, and has a coating thereon. A heating rod and a temperature sensor are arranged in the die, and a soldering temperature is controlled and adjusted by PLC. Due to a relatively large force during soldering, in order to prevent the medicine mixing cup from being damaged, the medicine mixing cup is supported from below.

Optionally, the tape soldering driving component 710 is a driving cylinder, and its cylinder rod is connected with the tape soldering die 711.

Figure 22 shows a structural schematic diagram of a tape cutting mechanism of the soldering device in Figure 2.

The tape cutting mechanism includes: a tape cutting driving component 712 and a tape cutter 713 which is connected with a driving end of the tape cutting driving component 712 and is driven by the tape cutting driving component 712 to cut the peeling tape.

Optionally, the tape cutting driving component 712 is a driving cylinder, and its cylinder rod is connected with the tape cutter 713.

In this way, at an initial stage, the peeling tape is fed into the track manually, the tape pressing component 708 is extended to compress the peeling tape through the tape pressing block 709, the peeling tape vertical driving component 706 drives its cylinder rod to extend, the peeling tape vacuum suction head 707 contacts the tape from a hole below the track and sucks the peeling tape, and the tensioning cylinder 702 is extended to release the peeling tape. The tape pressing component 708 drives the tape pressing block 709 to lift upwards, that is to retract. The peeling tape horizontal driving component 705 drives its cylinder rod to extend, for conveying the peeling tape forwards by a given length to top of the medicine mixing cup. The tape soldering driving component 710 drives its cylinder rod to extend, and the tape soldering die 711 compresses the peeling tape to start soldering (the soldering quality is controlled by the soldering time and the soldering temperature). At this point, the tape pressing component 708 drives the tape pressing block 709 to extend and press the peeling tape of the track; the tape cutting driving component 712 drives its cylinder rod to extend, and cuts the peeling tape through the tape cutter 713; the tensioning cylinder 702 retracts and tensions a tape roll, the peeling tape vacuum suction head 707 is not in the vacuum state, the peeling tape vertical driving component 706 drives its cylinder rod to retract and be off the peeling tape, and the peeling tape horizontal driving component 705 drives its cylinder rod to retract. The working station returns to the initial state, and the dividing table 101 rotates to perform the next action.

Optionally, the soldering device 700 further includes: a tape trimming mechanism, for trimming a shape of the peeling tape soldered onto the medicine mixing cup, so that the peeling tape may easily be peeled in use.

Figure 23 shows a structural schematic diagram of a tape trimming mechanism of the soldering device in Figure 2.

The tape trimming mechanism includes: a tape trimming driving component 714 and a tape trimming knife 715 which is connected with a driving end of the tape trimming driving component 714, and is driven by the tape trimming driving component 714 to trim the shape of the peeling tape. Specifically, the driving end of the tape trimming driving component 714 is provided with a knife holder 716 on which the tape trimming knife 715 is mounted. The heating function may be set on the knife holder 716 as needed, for example, a heater is arranged in the knife holder 716.

Optionally, the tape trimming driving component 714 is a driving cylinder, and the knife holder 716 is connected with the cylinder rod of the tape trimming driving component 714, to move up and down. The tape trimming knife 715 is mounted on the knife holder 716, and may be folded into the desire shape.

Optionally, the tape trimming knife 715 is serrated, and may be folded into the desire shape.

In this way, the peeling tape soldered on the medicine mixing cup and this medicine mixing cup are conveyed to the tape trimming mechanism. After the tape trimming mechanism detects this peeling tape and the medicine mixing cup, the tape trimming driving component 714 is started up, so as to further control the tape trimming knife 715 to press down and cut the interface of the peeling tape into a specified shape. Afterwards, slitter edges are torn off by a mechanical structure, such that the interface of the peeling tape has the final shape, for peeling off in use.

The output device 800 is arranged on the rack 100 in butt-joint with the dividing table 101, for outputting the assembled medicine mixer.

Figure 24 shows a structural schematic diagram of an output device in Figure 2.

The output device 800 includes an output driving component and an output track 802. The output track 802 is in butt-joint with the dividing table 101. A driving shaft of the output driving component 801 pushes the assembled medicine mixer on the clamp 102 of the dividing table 101 into the output track 802, such that the assembled medicine mixer slides down to a storage tank or a belt to finish assembly. Afterwards, the output driving component 801 is retracted, and the dividing table 101 rotates, finishing one cycle of production.

Optionally, the output driving component 801 is a driving cylinder.

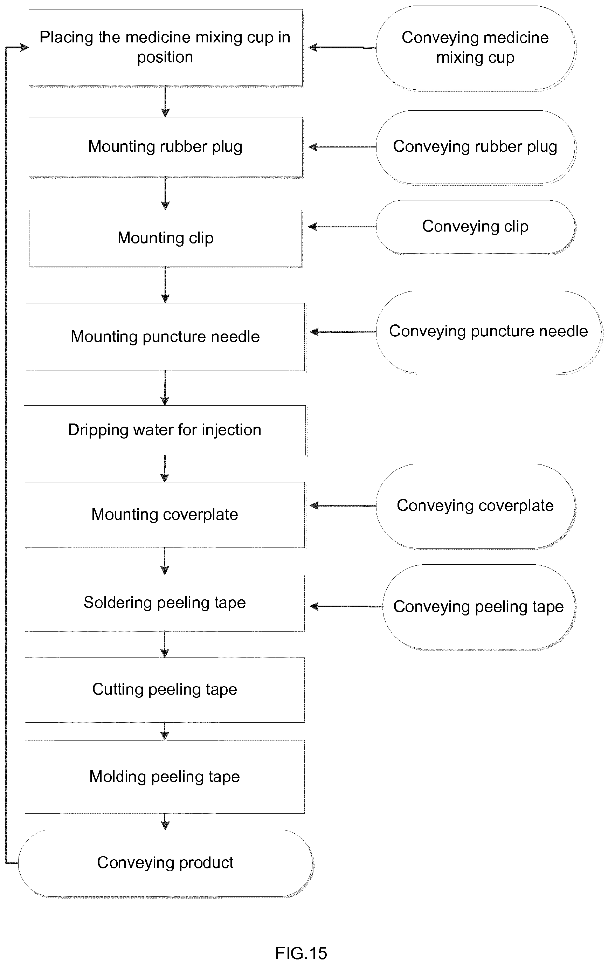

Figure 15 shows a workflow chart of an assembly machine for a medicine mixer according to some embodiments of the present invention.

The workflow of the assembly machine for a medicine mixer according to the present embodiment will be explained below in combination with Figure 15.

In the step of placing the medicine mixing cup in position, the medicine mixing cup is conveyed to the given position by a conveying system consisting of the oscillating disk and the track, and the mechanism hand (or a fetching device) is used to convey the medicine mixing cup into the clamp of the rotatable dividing table. The dividing table rotates to the next working station.

In the step of mounting rubber plug, the rubber plug conveying system consisting of the oscillating disk and the track conveys the rubber plug to the given position, for sucking the rubber plug through the vacuum suction head, and mounting the cylinder in the medicine mixing cup. The equipment detects the rubber plug by vacuum detection and a photoelectric sensor. If the rubber plug is not in position or is not sucked by the vacuum suction head, the machine is stopped to give an alarm, waiting for human treatment. The rubber plug is mounted in position, and then the dividing table rotates to the next working station.

In the step of mounting clip, the elastic clip conveying system consisting of the oscillating disk and the track conveys the elastic clip to the given position, for mounting the elastic clip in the medicine mixing cup through the fetching device, and the clip is ensured to be clipped in the medicine mixing cup by a cylinder press-down distance and a force. The dividing table rotates to the next working station.

In the step of mounting puncture needle, the puncture needle conveying system consisting of the oscillating disk and the track conveys the puncture needle to the given position, for conveying to the medicine mixer through vacuum suction head (or a mechanical hand), and ensuring the position where the puncture needle is mounted by a stroke and force of the cylinder. The puncture needle is detected by the photoelectric sensor and the vacuum detection. If the puncture needle is not in the given position or is not picked up, the machine is stopped to give an alarm, waiting for human treatment. The peristaltic pump is mounted at this working station. With the peristaltic pump and the cannula, quantitative water for injection is dripped into the medicine mixing cup during the process of mounting the puncture needle, that is the dripping working station. Afterwards, the dividing table rotates to the next working station.

In the step of mounting coverplate, after the coverplate is conveyed to the given position, the equipment sucks the coverplate by the vacuum suction head, and mounts the same onto the medicine mixing cup through the cylinder. The coverplate is detected by the photoelectric sensor and vacuum detection. If the coverplate is not at the given position or not picked up, the machine is stopped to give an alarm, waiting for human treatment. At this point, the dividing table rotates to the next working station.

In the step of soldering peeling tape, the peeling tape is fixed on a rotatable wheel on the support, and the length of the tape conveyed each time is decided by the stroke of the conveying cylinder with a suction disk. The tape is just covered on the medicine mixing cup, and the heated soldering die ensures qualified soldering of the peeling tape with the action of cylinder. Meanwhile, the cutter on the cylinder cuts the peeling tape, i.e., the step of cutting peeling tape. The dividing table rotates to the next working station.

It should be noted that the peeling tape with a predetermined length may be cut firstly, and then this peeling tape is soldered onto the medicine mixing cup.

In the step of molding peeling tape, a serrated knife with a required shape is mounted at the peeling tape molding working station. When the medicine mixing cup enters this working station, the cylinder drives the cutter to press down, for molding and cutting the peeling tape. A vacuum collection structure is arranged at the working station, for absorbing generated chippings.

In the step of conveying finished product, the cylinder pushes the assembled medicine mixing cup down from the clamp into a collection box through a slideway.

As mentioned above, the assembly machine for a medicine mixer according to the present invention is controlled by PLC. A feeding system consisting of a plurality of groups of oscillating disks and tracks conveys each part at an interface of the medicine mixer to given positions of the equipment; each part is conveyed and assembled on the dividing table driven by a servo motor or a pneumatic dividing table or a cam indexing unit through a machine hand, a vacuum suction head or a fetching device, which effectively improves the working efficiency, saves manpower resources and ensures product assembling qualities.

It shall be understood that the above embodiments of the present invention are only used for illustratively explaining the principle of the present invention, without limiting the present invention.

## Claims

1. An assembly machine for a medicine mixer, comprising:
a rack (100), provided with a rotatable dividing table (101) on which a plurality of clamps (102) is arranged fixedly;
a medicine mixing cup mounting device (200), arranged on the rack (100) in butt-joint with the dividing table (101), for mounting the medicine mixing cup on the clamp (102) of the dividing table;
a rubber plug mounting device (300), arranged on the rack (100) in butt-joint with the dividing table (101), for mounting the rubber plug in the medicine mixing cup;
an elastic clip mounting device (400), arranged on the rack (100) in butt-joint with the dividing table (101), for mounting an elastic clip in the medicine mixing cup;
a puncture needle mounting device (500), arranged on the rack (100) in butt-joint with the dividing table (101), for mounting a puncture needle in the medicine mixing cup;
a coverplate mounting device (600), arranged on the rack (100) in butt-joint with the dividing table (101), for mounting a coverplate on the medicine mixing cup;
a soldering device (700), arranged on the rack (100) in butt-joint with the dividing table (101), for covering a peeling tape on the coverplate and soldering the same on the medicine mixing cup; and
an output device (800), arranged on the rack (100) in butt-joint with the dividing table (101), for outputting the assembled medicine mixer.

2. The assembly machine according to claim 1, wherein the medicine mixing cup mounting device (200), the rubber plug mounting device (300), the elastic clip mounting device (400), the puncture needle mounting device (500), the coverplate mounting device (600), the soldering device (700) and the output device (800) are arranged annularly along an outer circumference of the dividing table (101) successively.

3. The assembly machine according to any one of claims 1-2, wherein the medicine mixing cup mounting device (200) comprises: a medicine mixing cup conveying mechanism and a medicine mixing cup clamping mechanism; the medicine mixing cup conveying mechanism is used for conveying the medicine mixing cup, and the medicine mixing cup clamping mechanism is used for clamping the medicine mixing cup on the medicine mixing cup conveying mechanism, and placing this medicine mixing cup on the clamp (102).

4. The assembly machine according to claim 3, wherein the medicine mixing cup conveying mechanism comprises: a medicine mixing cup oscillating disk (201) and a medicine mixing cup conveying track (202); one end of the medicine mixing cup conveying track (202) is in butt-joint with the medicine mixing cup oscillating disk (201), and its other end is in butt-joint with the dividing table (101).

5. The assembly machine according to any one of claims 1-4, wherein the rubber plug mounting device (300) comprises: a rubber plug conveying mechanism and a rubber plug clamping mechanism; the rubber plug conveying mechanism is used for conveying the rubber plug, and the rubber plug clamping mechanism is used for clamping the rubber plug on the rubber plug conveying mechanism, and placing this rubber plug in the medicine mixing cup.

6. The assembly machine according to claim 5, wherein the rubber plug conveying mechanism comprises: a rubber plug oscillating disk (301) and a rubber plug conveying track (302); one end of the rubber plug conveying track (302) is in butt-joint with the rubber plug oscillating disk (301), and its other end is in butt-joint with the dividing table (101).

7. The assembly machine according to any one of claims 6, wherein the elastic clip mounting device (400) comprises: an elastic clip conveying mechanism and an elastic clip clamping mechanism; the elastic clip conveying mechanism is used for conveying the elastic clip, and the elastic clip clamping mechanism is used for clamping the elastic clip on the elastic clip conveying mechanism, and placing this elastic clip in the medicine mixing cup.

8. The assembly machine according to claim 7, wherein the elastic clip conveying mechanism comprises: an elastic clip oscillating disk (401) and an elastic clip conveying track (402); one end of the elastic clip conveying track (402) is in butt-joint with the elastic clip oscillating disk (401), and its other end is in butt-joint with the dividing table (101).

9. The assembly machine according to any one of claims 1-8, wherein the puncture needle mounting device (500) comprises: a puncture needle conveying mechanism and a puncture needle clamping mechanism; the puncture needle conveying mechanism is used for conveying the puncture needle, and the puncture needle clamping mechanism is used for clamping the puncture needle on the puncture needle conveying mechanism, and placing this puncture needle in the medicine mixing cup.

10. The assembly machine according to claim 9, wherein the puncture needle conveying mechanism comprises: a puncture needle oscillating disk (501) and a puncture needle conveying track (502); one end of the puncture needle conveying track (502) is in butt-joint with the puncture needle oscillating disk (501), and its other end is in butt-joint with the dividing table (101).

11. The assembly machine according to any one of claims 1-10, wherein the coverplate mounting device (600) comprises: a coverplate conveying mechanism and a coverplate clamping mechanism; the coverplate conveying mechanism is used for conveying the coverplate, and the coverplate clamping mechanism is used for clamping the coverplate on the coverplate conveying mechanism, and placing this coverplate on the medicine mixing cup.

12. The assembly machine according to claim 11, wherein the coverplate conveying mechanism comprises a coverplate oscillating disk (601) and a coverplate conveying track (602); one end of the coverplate conveying track (602) is in butt-joint with the coverplate oscillating disk (601), and its other end is in butt-joint with the dividing table (101).

13. The assembly machine according to any one of claims 1-12, wherein the soldering device (700) comprises: a tape conveying mechanism, a tape pulling mechanism, a soldering mechanism and a tape cutting mechanism; the tape conveying mechanism is used for conveying the peeling tape to the tape pulling mechanism, the tape pulling mechanism is used for conveying the peeling tape to top the medicine mixing cup, the soldering mechanism is used for soldering the peeling tape above the medicine mixing cup onto the medicine mixing cup, and the tape cutting mechanism is used for cutting the peeling tape.

14. The assembly machine according to claim 13, wherein the tape conveying mechanism comprises: a tape rolling support (701), a tensioning cylinder (702), a fixing roller (703) and a tape conveying roller (704); the tensioning cylinder (702) drives the tape conveying roller (704) to convey the peeling tape on the tape rolling support (701) to the tape conveying mechanism through the fixing roller (703).

15. The assembly machine according to any one of claims 1-14, wherein the output device comprises: an output driving component (801) and an output track (802), the output track (802) is in butt-joint with the dividing table (101), and the driving shaft of the output driving component (801) pushes the assembled medicine mixer on the clamp of the dividing table (101) into the output track (802).

## Patentansprüche

1. Montagemaschine für einen Medikamentenmischer, umfassend:
ein Gestell (100), das mit einem drehbaren Teilungstisch (101) versehen ist, an dem eine Vielzahl von Klemmen (102) fest angeordnet ist;
eine Medikamentenmischbecher-Befestigungsvorrichtung (200), die an dem Gestell (100) in Stoßverbindung mit dem Teilungstisch (101) angeordnet ist und zum Montieren des Medikamentenmischbechers an der Klemme (102) des Teilungstisches verwendet wird;
eine Gummistopfen-Befestigungsvorrichtung (300), die an dem Gestell (100) in Stoßverbindung mit dem Teilungstisch (101) angeordnet ist, um den Gummistopfen in dem Medikamentenmischbecher zu montieren;
eine Befestigungsvorrichtung (400) für elastische Klammern, die an dem Gestell (100) in Stoßverbindung mit dem Teilungstisch (101) angeordnet ist, um eine elastische Klammer in dem Medikamentenmischbecher zu montieren;
eine Punktionsnadel-Befestigungsvorrichtung (500), die an dem Gestell (100) in Stoßverbindung mit dem Teilungstisch (101) angeordnet ist, um eine Punktionsnadel in dem Medikamentenmischbecher zu montieren;
eine Abdeckplatten-Befestigungsvorrichtung (600), die an dem Gestell (100) in Stoßverbindung mit dem Teilungstisch (101) angeordnet ist, um eine Abdeckplatte an dem Medikamentenmischbecher zu montieren;
eine Lötvorrichtung (700), die an dem Gestell (100) in Stoßverbindung mit dem Teilungstisch (101) angeordnet ist und zum Abdecken eines Abziehbandes auf der Abdeckplatte und zum Löten desselben auf dem Medikamentenmischbecher verwendet wird; und
eine Ausgabevorrichtung (800), die an dem Gestell (100) in Stoßverbindung mit dem Teilungstisch (101) angeordnet ist, um den zusammengesetzten Medikamentenmischer auszugeben.

2. Montagemaschine nach Anspruch 1, **dadurch gekennzeichnet, dass** die Medikamentenmischbecher-Befestigungsvorrichtung (200), die Gummistopfen-Befestigungsvorrichtung (300), die Befestigungsvorrichtung für elastische Klammern (400), die Punktionsnadel-Befestigungsvorrichtung (500), die Abdeckplatten-Befestigungsvorrichtung (600), die Lötvorrichtung (700) und die Ausgabevorrichtung (800) nacheinander ringförmig entlang eines Außenumfangs des Teilungstisches (101) angeordnet sind.

3. Montagemaschine nach einem der Ansprüche 1 bis 2, **dadurch gekennzeichnet, dass** die Medikamentenmischbecher-Befestigungsvorrichtung (200) einen Medikamentenmischbecher-Fördermechanismus und einen Medikamentenmischbecher-Klemmmechanismus umfasst, wobei der Medikamentenmischbecher-Fördermechanismus zum Fördern des Medikamentenmischbechers verwendet wird, und wobei der Medikamentenmischbecher-Klemmmechanismus dazu verwendet wird, den Medikamentenmischbecher an dem Medikamentenmischbecher-Fördermechanismus festzuklemmen und diesen Medikamentenmischbecher an der Klemme (102) zu platzieren.

4. Montagemaschine nach Anspruch 3, **dadurch gekennzeichnet, dass** der Medikamentenmischbecher-Fördermechanismus eine Medikamentenmischbecher-Schwingscheibe (201) und eine Medikamentenmischbecher-Förderbahn (202) umfasst; wobei ein Ende der Medikamentenmischbecher-Förderbahn (202) in Stoßverbindung mit der Schwingscheibe (201) des Medikamentenmischbechers und das andere Ende in Stoßverbindung mit dem Teilungstisch (101) steht.

5. Montagemaschine nach einem der Ansprüche 1 bis 4, **dadurch gekennzeichnet, dass** die Gummistopfen-Befestigungsvorrichtung (300) einen Gummistopfen-Fördermechanismus und einen Gummistopfen-Klemmmechanismus umfasst; und wobei der Gummistopfen-Fördermechanismus zum Fördern des Gummistopfens verwendet wird, und wobei der Gummistopfen-Klemmmechanismus dazu verwendet wird, den Gummistopfen an dem Gummistopfen-Fördermechanismus festzuklemmen und diesen Gummistopfen in dem Medikamentenmischbecher zu platzieren.

6. Montagemaschine nach Anspruch 5, **dadurch gekennzeichnet, dass** der Gummistopfen-Fördermechanismus eine Gummistopfen-Schwingscheibe (301) und eine Gummistopfen-Förderbahn (302) umfasst, und wobei ein Ende der Gummistopfen-Förderbahn (302) in Stoßverbindung mit der Gummistopfen-Schwingscheibe (301) und das andere Ende in Stoßverbindung mit dem Teilungstisch (101) steht.

7. Montagemaschine nach einem der Ansprüche 6, **dadurch gekennzeichnet, dass** die Befestigungsvorrichtung (400) für elastische Klammern einen Fördermechanismus für elastische Klammern und einen Klemmmechanismus für elastische Klammern umfasst, und wobei der Fördermechanismus für elastische Klammern dazu verwendet wird, die elastische Klammer zu fördern, und wobei der Klemmmechanismus für elastische Klammern dazu verwendet wird, die elastische Klammer an dem Fördermechanismus für elastische Klammern festzuklemmen und diese elastische Klammer in dem Medikamentenmischbecher zu platzieren.

8. Montagemaschine nach Anspruch 7, **dadurch gekennzeichnet, dass** der Fördermechanismus für elastische Klammern eine Schwingscheibe (401) für elastische Klammern und eine Förderbahn (402) für elastische Klammern umfasst; und wobei ein Ende der Förderbahn für elastische Klammern (402) in Stoßverbindung mit der Schwingscheibe (401) für elastische Klammern und das andere Ende in Stoßverbindung mit dem Teilungstisch (101) steht.

9. Montagemaschine nach einem der Ansprüche 1-8, **dadurch gekennzeichnet, dass** die Punktionsnadel-Befestigungsvorrichtung (500) einen Punktionsnadel-Fördermechanismus und einen Punktionsnadel-Klemmmechanismus umfasst; und wobei der Punktionsnadel-Fördermechanismus zum Fördern der Punktionsnadel verwendet wird , und wobei der Punktionsnadel-Klemmmechanismus dazu verwendet wird, die Punktionsnadel an dem Punktionsnadel-Fördermechanismus festzuklemmen und diese Punktionsnadel in dem Medikamentenmischbecher zu platzieren.

10. Montagemaschine nach Anspruch 9, **dadurch gekennzeichnet, dass** der Punktionsnadel-Fördermechanismus eine Punktionsnadel-Schwingscheibe (501) und eine Punktionsnadel-Förderbahn (502) umfasst; wobei ein Ende der Punktionsnadel-Förderbahn (502) in Stoßverbindung mit der Punktionsnadel-Schwingscheibe (501) und das andere Ende in Stoßverbindung mit dem Teilungstisch (101) steht.

11. Montagemaschine nach einem der Ansprüche 1 bis 10, **dadurch gekennzeichnet, dass** die Abdeckplatten-Befestigungsvorrichtung (600) einen Abdeckplatten-Fördermechanismus und einen Abdeckplatten-Klemmmechanismus umfasst, wobei der Abdeckplatten-Fördermechanismus zum Fördern der Abdeckplatte verwendet wird, und wobei der Abdeckplatten-Klemmmechanismus dazu verwendet wird, die Abdeckplatte an dem Abdeckplatten-Fördermechanismus festzuklemmen und diese Abdeckplatte an dem Medikamentenmischbecher zu platzieren.

12. Montagemaschine nach Anspruch 11, **dadurch gekennzeichnet, dass** der Abdeckplatten-Fördermechanismus eine Abdeckplatten-Schwingscheibe (601) und eine Abdeckplatten-Förderbahn (602) umfasst; wobei ein Ende der Abdeckplatten-Förderbahn (602) in Stoßverbindung mit der Abdeckplatten-Schwingscheibe (601) und das andere Ende in Stoßverbindung mit dem Teilungstisch (101) steht.

13. Montagemaschine nach einem der Ansprüche 1-12, **dadurch gekennzeichnet, dass** die Lötvorrichtung (700) einen Bandfördermechanismus, einen Bandziehmechanismus, einen Lötmechanismus und einen Bandschneidemechanismus umfasst; und wobei der Bandfördermechanismus zum Fördern des Abziehbandes zum Bandziehmechanismus verwendet wird, und wobei der Bandziehmechanismus dazu verwendet wird, das Abziehband ans Oberteil des Medikamentenmischbechers zu fördern, und wobei der Lötmechanismus dazu verwendet wird, das Abziehband über dem Medikamentenmischbecher an den Medikamentenmischbecher zu löten, und wobei der Bandschneidemechanismus zum Schneiden des Abziehbandes verwendet wird.

14. Montagemaschine nach Anspruch 13, **dadurch gekennzeichnet, dass** der Bandfördermechanismus einen Bandaufrollträger (701), einen Spannzylinder (702), eine Fixierrolle (703) und eine Bandförderrolle (704) umfasst; und wobei der Spannzylinder (702) die Bandförderrolle (704) dazu antreibt, das Abziehband auf dem Bandaufrollträger (701) durch die Fixierrolle (703) zum Bandfördermechanismus zu fördern.

15. Montagemaschine nach einem der Ansprüche 1-14, **dadurch gekennzeichnet, dass** die Ausgabevorrichtung eine Ausgabeantriebskomponente (801) und eine Ausgabebahn (802) umfasst, und wobei die Ausgabebahn (802) in Stoßverbindung mit der Teilungstisch (101) steht, und wobei die Antriebswelle der Ausgabeantriebskomponente (801) den zusammengebauten Medikamentenmischer auf der Klemme des Teilungstisches (101) in die Ausgabebahn (802) schiebt.

## Revendications

1. Machine d'assemblage pour un mélangeur de médicaments, comprenant :
un bâti (100), muni d'une table de séparation rotative (101) sur laquelle une pluralité de pinces (102) est disposée de manière fixe ;
un dispositif de montage de gobelet de mélange de médicaments (200), disposé sur ledit bâti (100) en jonction bout à bout avec ladite table de séparation (101), pour monter ledit gobelet de mélange de médicaments sur ladite pince (102) de ladite table de séparation ;
un dispositif de montage de bouchon en caoutchouc (300), disposé sur ledit bâti (100) en jonction bout à bout avec ladite table de séparation (101), pour monter le bouchon en caoutchouc dans le gobelet de mélange de médicaments ;
un dispositif de montage d'agrafe élastique (400), disposé sur ledit bâti (100) en jonction bout à bout avec ladite table de séparation (101), pour monter une agrafe élastique dans le gobelet de mélange de médicaments ;
un dispositif de montage d'aiguille de ponction (500), disposé sur ledit bâti (100) en jonction bout à bout avec ladite table de séparation (101), pour monter une aiguille de ponction dans ledit gobelet de mélange de médicaments ;
un dispositif de montage de plaque de recouvrement (600), agencé sur ledit bâti (100) en jonction bout à bout avec la table de séparation (101), pour monter une plaque de recouvrement sur le gobelet de mélange de médicaments ;
un dispositif de soudage (700), disposé sur ledit bâti (100) en jonction bout à bout avec ladite table de séparation (101), pour couvrir une bande de pelage sur ladite plaque de recouvrement et souder celle-ci sur ledit gobelet de mélange de médicaments ; et
un dispositif de sortie (800), disposé sur ledit bâti (100) en jonction bout à bout avec ladite table de séparation (101), pour sortir ledit mélangeur de médicaments assemblé.

2. Machine d'assemblage selon la revendication 1, dans laquelle ledit dispositif de montage de gobelet de mélange de médicaments (200), ledit dispositif de montage de bouchon en caoutchouc (300), ledit dispositif de montage d'agrafe élastique (400), ledit dispositif de montage d'aiguille de ponction (500), ledit dispositif de montage de plaque de recouvrement (600), ledit dispositif de soudage (700) et ledit dispositif de sortie (800) sont disposés de manière annulaire le long d'une circonférence extérieure de ladite table de séparation (101) successivement.

3. Machine d'assemblage selon l'une quelconque des revendications 1 et 2, dans laquelle ledit dispositif de montage de godet de mélange de médicaments (200) comprend : un mécanisme de transport de godet de mélange de médicaments et un mécanisme de serrage de godet de mélange de médicaments ; ledit mécanisme de transport de godet de mélange de médicaments est utilisé pour transporter ledit godet de mélange de médicaments, et ledit mécanisme de serrage de godet de mélange de médicaments est utilisé pour serrer ledit godet de mélange de médicaments sur ledit mécanisme de transport de godet de mélange de médicaments, et placer ce godet de mélange de médicaments sur ladite pince (102).

4. Machine d'assemblage selon la revendication 3, dans laquelle ledit mécanisme de transport de godet de mélange de médicaments comprend : un disque oscillant de godet de mélange de médicaments (201) et une piste de transport de godet de mélange de médicaments (202) ; une extrémité de ladite piste de transport de godet de mélange de médicaments (202) est en jonction bout à bout avec ledit disque oscillant de godet de mélange de médicaments (201), et son autre extrémité est en jonction bout à bout avec ladite table de séparation (101).

5. Machine d'assemblage selon l'une quelconque des revendications 1 à 4, dans laquelle ledit dispositif de montage de bouchon en caoutchouc (300) comprend : un mécanisme de transport de bouchon en caoutchouc et un mécanisme de serrage de bouchon en caoutchouc ; ledit mécanisme de transport de bouchon en caoutchouc est utilisé pour transporter ledit bouchon en caoutchouc, et ledit mécanisme de serrage de bouchon en caoutchouc est utilisé pour serrer ledit bouchon en caoutchouc sur ledit mécanisme de transport de bouchon en caoutchouc, et placer ce bouchon en caoutchouc dans ledit gobelet de mélange de médicaments.

6. Machine d'assemblage selon la revendication 5, dans laquelle ledit mécanisme de transport de bouchon en caoutchouc comprend : un disque oscillant de bouchon en caoutchouc (301) et une piste de transport de bouchon en caoutchouc (302) ; une extrémité de ladite piste de transport de bouchon en caoutchouc (302) est en jonction bout à bout avec ledit disque oscillant de bouchon en caoutchouc (301), et son autre extrémité est en jonction bout à bout avec ladite table de séparation (101).

7. Machine d'assemblage selon l'une quelconque des revendications 6, dans laquelle ledit dispositif de montage d'agrafe élastique (400) comprend : un mécanisme de transport d'agrafe élastique et un mécanisme de serrage d'agrafe élastique ; ledit mécanisme de transport d'agrafe élastique est utilisé pour transporter ladite agrafe élastique, et le mécanisme de serrage d'agrafe élastique est utilisé pour serrer ladite agrafe élastique sur ledit mécanisme de transport d'agrafe élastique, et placer cette agrafe élastique dans ledit gobelet de mélange de médicaments.

8. Machine d'assemblage selon la revendication 7, dans laquelle ledit mécanisme de transport d'agrafe élastique comprend : un disque oscillant d'agrafe élastique (401) et une piste de transport d'agrafe élastique (402) ; une extrémité de ladite piste de transport d'agrafe élastique (402) est en jonction bout à bout avec ledit disque oscillant d'agrafe élastique (401), et son autre extrémité est en jonction bout à bout avec ladite table de séparation (101).

9. Machine d'assemblage selon l'une quelconque des revendications 1 à 8, dans laquelle ledit dispositif de montage d'aiguille de ponction (500) comprend : un mécanisme de transport d'aiguille de ponction et un mécanisme de serrage d'aiguille de ponction ; ledit mécanisme de transport d'aiguille de ponction est utilisé pour transporter ladite aiguille de ponction, et ledit mécanisme de serrage d'aiguille de ponction est utilisé pour serrer ladite aiguille de ponction sur ledit mécanisme de transport d'aiguille de ponction, et placer cette aiguille de ponction dans ledit gobelet de mélange de médicaments.

10. Machine d'assemblage selon la revendication 9, dans laquelle ledit mécanisme de transport d'aiguille de ponction comprend : un disque oscillant d'aiguille de ponction (501) et une piste de transport d'aiguille de ponction (502) ; une extrémité de ladite piste de transport d'aiguille de ponction (502) est en jonction bout à bout avec ledit disque oscillant d'aiguille de ponction (501), et son autre extrémité est en jonction bout à bout avec ladite table de séparation (101).

11. Machine d'assemblage selon l'une quelconque des revendications 1 à 10, dans laquelle ledit dispositif de montage de plaque de recouvrement (600) comprend : un mécanisme de transport de plaque de recouvrement et un mécanisme de serrage de plaque de recouvrement ; ledit mécanisme de transport de plaque de recouvrement est utilisé pour transporter ladite plaque de recouvrement, et ledit mécanisme de serrage de plaque de recouvrement est utilisé pour serrer ladite plaque de recouvrement sur ledit mécanisme de transport de plaque de recouvrement, et placer cette plaque de recouvrement sur ledit gobelet de mélange de médicaments.

12. Machine d'assemblage selon la revendication 11, dans laquelle ledit mécanisme de transport de plaque de recouvrement comprend un disque oscillant de plaque de recouvrement (601) et une piste de transport de plaque de recouvrement (602) ; une extrémité de ladite piste de transport de plaque de recouvrement (602) est en jonction bout à bout avec ledit disque oscillant de plaque de recouvrement (601), et son autre extrémité est en jonction bout à bout avec ladite table de séparation (101).

13. Machine d'assemblage selon l'une quelconque des revendications 1 à 12, dans laquelle ledit dispositif de soudage (700) comprend : un mécanisme de transport de bande, un mécanisme de traction de bande, un mécanisme de soudage et un mécanisme de coupe de bande ; ledit mécanisme de transport de bande est utilisé pour transporter ladite bande de pelage vers ledit mécanisme de traction de bande, ledit mécanisme de traction de bande est utilisé pour transporter ladite bande de pelage au-dessus dudit godet de mélange de médicaments, ledit mécanisme de soudage est utilisé pour souder ladite bande de pelage au-dessus dudit godet de mélange de médicaments sur ledit godet de mélange de médicaments, et ledit mécanisme de coupe de bande est utilisé pour couper ladite bande de pelage.

14. Machine d'assemblage selon la revendication 13, dans laquelle ledit mécanisme de transport de bande comprend : un support d'enroulement de bande (701), un cylindre tendeur (702), un rouleau de fixation (703) et un rouleau de transport de bande (704) ; ledit cylindre tendeur (702) entraîne ledit rouleau de transport de bande (704) pour transporter ladite bande de pelage sur ledit support d'enroulement de bande (701) vers ledit mécanisme de transport de bande à travers ledit rouleau de fixation (703).

15. Machine d'assemblage selon l'une quelconque des revendications 1 à 14, dans laquelle ledit dispositif de sortie comprend : un composant d'entraînement de sortie (801) et une piste de sortie (802), ladite piste de sortie (802) est en jonction bout à bout avec ladite table de division (101), et l'arbre d'entraînement dudit composant d'entraînement de sortie (801) pousse ledit mélangeur de médicaments assemblé sur ladite pince de ladite table de séparation (101) dans ladite piste de sortie (802).
